# EUROPEAN PATENT SPECIFICATION

(11) **EP 2 905 103 B1**
(45) Date of publication and mention of the grant of the patent: **25.01.2017**
(21) Application number: 14154246.4
(22) Date of filing: 07.02.2014
(51) Int. Cl.: B23K 11/00, B23K 11/14, B23K 11/25

(54) **Electrode arrangement for welding a nut welding assembly with monitoring of purge air supply**
Elektrodenanordnung zum Schweissen einer Nut-Schweissverbindung mit Überwachung von Luftdruck
Agencement d'électrode pour souder un assemblage écrou soudé avec surveillance de la pression d'évacuation d'air

(43) Date of publication of application: 12.08.2015
(73) Proprietor: Volvo Car Corporation, 40 531 Göteborg (SE)
(72) Inventor: Orell, Juha, 294 93 Sölvesbo (SE)
(74) Representative: Volvo Car Corporation

(56) References cited:
- DE-B3-102006 013 342
- JP-A- H1 058 155
- JP-A- H05 237 667
- JP-A- H06 238 460
- US-B2- 6 576 859

## Description

### TECHNICAL FIELD

The present invention relates to an electrode arrangement (see claim 1) and nut welding assembly comprising an electrode arrangement according to somme embodiments (see claim 6).

### BACKGROUND

Modern production lines require efficient and reliable production steps which can be monitored in order to recognize an outcome of the production step and be able to recognize the need for spare part replacements etc. Nut welding and stud welding are efficient methods of fastening a fastener, such as a stud or a nut, onto a work piece. These methods are commonly used in the automotive industry. Two electrodes are used where a fastener is positioned onto one of the electrodes. The other electrode is intended to abut the work piece and apply a pressure thereto, such that the fastener and work piece are forced together. Also, an electrical current is applied through the fastener and the work piece, such that these are welded together. During nut welding and stud welding, purge air is used to clean at least one of the electrodes after each welding operation has been performed. Typically such welding forms part of an automated process where fasteners are placed onto one of the electrodes. Occasionally a fastener is not properly placed onto the electrode or may not be placed at all onto the electrode. A solution to detect these events is to have one of the electrodes slidably arranged and to use one or more sensors to detect the position of the electrode to thereby determine whether the fastener is present and properly oriented. Sensors used are typically inductive sensors. High electrical currents, used in the process, may disturb electrical sensors and puts a limitation on the types of sensors which can be used for the purpose. Attempts have been made to solve the problem. The document US 6 576 859 B1 , on which the preamble of claim 1 is based, describes the use of an optical sensor to monitor a position of an electrode. However, despite of such attempts, nut welding and stud welding often constitute production steps with high error rates in modern production lines.

The document DE102006013342 B3 relates to a device having a chamber connected by a channel with a connecting cable of a compressed gas supplying device coupled with a pressure gauge, and a gas pressure is fitted in the chamber. The gas pressure is developed in the chamber by pressure gauge, where the gauge is coupled with a controlling of the welding fixture.

JPH1058155 A relates to a detecting device of a welding machine constructed so as to include an upper electrode and a lower electrode. An air passage is formed in the upper electrode, a pressure sensor is connected thereto. An electrode main body, an exchange electrode and a guide pin are included in the lower electrode, an air chamber is formed integrally with the upper opening part of an electrode main body and a large diameter hole of the exchange electrode, an air supply device is connected to the air camber. The guide pin consists of a body part and a bottom part, an air passage is formed directing upward from the body part so that the air passage of the upper electrode is roughly aligned to its axial centre. When the bolt is supplied, air in the air chamber is not supplied to the air passage, when the bolt is not supplied, air is supplied to the air passage, and the pressure sensor is operated.

JPH06238460 A relates to a projection welding machine with a front and rear confirming function of a projection nut by the front and rear confirming device provided with an air path which is provided on the end face of the electrode and blocked up by abutting on the projection nut, an air power source to supply air to this air path, an air sensor to detect the change of a stationary state of the air supplied to the air path when the base material and the projection nut are pressurized and an informing means to operate by input from the air sensor and the projection nut is prevented from being welded to the base material with the front and rear in the reverse direction.

In view of the above, there is a need for an improved electrode arrangement for a nut welding assembly.

### SUMMARY

An object of the present invention is to provide an improved electrode arrangement for a nut welding assembly.

According to an aspect of the invention, the object is achieved by an electrode arrangement for a nut welding assembly as defined in claim 1, comprising an electrode holder, a guide pin, a first electrode head, a purge air supply, and a control unit, where the first electrode head is arranged at a distal end of the guide pin and where the first electrode head, during an intended use, is arranged to receive a fastener and to cooperate with a second electrode head, such that an electrical current is applied across the first electrode head and the second electrode head via the fastener and a work piece, to weld the fastener onto the work piece, and where the guide pin is slidably arranged in an aperture of the electrode holder between an upper position and a lower position, where the electrode holder comprises an internal space to which the purge air supply is connected and where the guide pin is arranged such that a connection between the internal space and the atmosphere is open when the guide pin is in the lower position and closed when the guide pin is in the upper position, wherein the control unit is arranged to monitor an air pressure of the purge air supply and to estimate a position of the guide pin on the basis of the monitored air pressure.

Since the position of the guide pin is estimated on the basis of the monitored air pressure, a simple and reliable estimation is achieved. Thereby, an improved electrode arrangement is provided.

As a result, the above mentioned object is achieved.

Further, since the position of the guide pin is estimated on the basis of the monitored air pressure, the need for an additional sensor is eliminated. As a result, the electrode arrangement can be provided at low cost. Also, with the arrangement provided, the risk of a sensor being disturbed by high electrical currents used during welding can be reduced since the control unit, monitoring the air pressure of the purge air supply, can be positioned at a distance from the first electrode head.

Even further, since there is no need for an additional sensor monitoring the position of the first electrode head, the electrode arrangement requires less wiring and can be provided in a cleaner design requiring fewer components. Thereby, the risk of a production stop is reduced. Also, service and maintenance of the electrode arrangement is facilitated and positioning of the electrode arrangement in relation to other objects in a workshop is facilitated.

Even further, since the control unit is arranged to monitor an air pressure of the purge air supply, the control unit will further be able to detect malfunction of the purge air. As a result, the risk of a production stop is further reduced.

According to some embodiments, the connection between the internal space and the atmosphere is via a gap between the guide pin and the aperture. Since the connection between the internal space and the atmosphere is via a gap between the guide pin and the aperture, the gap, as well as the guide pin, will be cleaned when the guide pin is in the lower position. Also, since the connection between the internal space and the atmosphere is via a gap between the guide pin and the aperture, the airflow incurred will provide some cooling of the guide pin and the first electrode head when the guide pin is in the lower position.

According to some embodiments, the arrangement comprises a spring arranged between the guide pin and the electrode holder to bias the guide pin towards the upper position. Since the arrangement comprises a spring arranged between the guide pin and the electrode holder to bias the guide pin towards the upper position, the guide pin will be returned to the upper position after each weld in a reliable manner.

According to some embodiments, the guide pin is arranged to be displaced from the upper position to the lower position by a relative movement between the first electrode head and the second electrode head from an open position to a closed position. Since the guide pin is arranged to be displaced from the upper position to the lower position by a relative movement between the first electrode head and the second electrode head from an open position to a closed position, a reliable estimation of the presence of, and/or orientation of, a fastener can be achieved by the control unit estimating the position of the guide pin on the basis of the monitored air pressure.

According to some embodiments, the arrangement further comprises a cooling jacket enclosing the electrode holder and an upper sealing and a first lower sealing which together with the cooling jacket and the electrode holder defines a first essentially cylindrical volume arranged to accommodate cooling liquid where the arrangement further comprises a second lower sealing arranged to cooperate with the first lower sealing to define second essentially cylindrical volume being in connection with the internal space of the electrode holder where the purge air supply is connected to the internal space via said second essentially cylindrical volume. Since the purge air supply is connected to the internal space via the second essentially cylindrical volume, the cooling jacket with the connection of said purge air supply will admit a 360 degree rotation of the cooling jacket around the electrode holder. As a result, flexibility of positioning of the electrode arrangement is improved and positioning of the electrode arrangement in relation to other objects in a workshop is facilitated.

Further embodiments herein aim to provide a nut welding assembly comprising an electrode arrangement according to some embodiments. Since the nut welding assembly comprises an electrode arrangement according to some embodiments, where the position of the guide pin is estimated on the basis of the monitored air pressure, a simple and reliable estimation is achieved. Thereby, an improved nut welding assembly is provided.

Again, as a result, the above mentioned object is achieved.

According to some embodiments, the nut welding assembly further comprises the second electrode head where the first electrode head and the second electrode head are movable relative to one another between an open position and a closed position, the open position constituting a position where a work piece and a fastener is intended to be positioned onto the first electrode head and the closed position constituting a position in which the first electrode head and the second electrode head are arranged to press together the fastener and the work piece and apply an electrical current through the fastener and the work piece to weld them together.

Further features of, and advantages with, the present invention will become apparent when studying the appended claims and the following detailed description. Those skilled in the art will realize that the different features described may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a nut welding assembly according to some embodiments comprising an electrode arrangement,
Fig. 2 illustrates a cross section of the electrode arrangement illustrated in Fig. 1, and
Fig. 3 illustrates the electrode arrangement illustrated in Fig. 2 with the guide pin illustrated in the lower position.

### DETAILED DESCRIPTION

Embodiments herein will now be described more fully with reference to the accompanying drawings, in which example embodiments are shown. Disclosed features of example embodiments may be combined as readily understood by one of ordinary skill in the art. Like numbers refer to like elements throughout.

Well-known functions or constructions will not necessarily be described in detail for brevity and/or clarity.

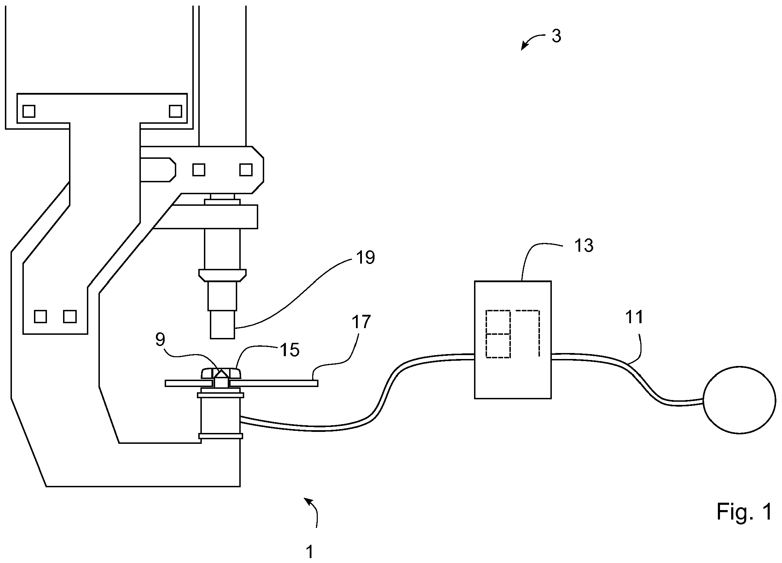

Fig. 1 illustrates a nut welding assembly 3 according to some embodiments. The nut welding assembly 3 comprises an electrode arrangement 1 comprising a first electrode head 9. The nut welding assembly 3 further comprises a second electrode head 19, where the first electrode head 9 and the second electrode head 19 are movable relative to one another between an open position and a closed position. In Fig. 1, the first electrode head 9 and the second electrode head 19 are illustrated in the open position. The open position constitutes a position where a work piece 17 and a fastener 15 is intended to be positioned onto the first electrode head 9 such that the first electrode head 9 extends through a hole in the work piece 17 and through a hole in the fastener 15. The closed position constitutes a position in which the first electrode head 9 and the second electrode head 19 are arranged to press together the fastener 15 and the work piece 17 and to apply an electrical current through the fastener 15 and the work piece 17 to weld them together. Fig. 1 also illustrates a purge air supply 11 and a control unit 13.

The purge air supply 11 comprises a duct with pressurized air. The pressurized air is used to clean parts, such as the first electrode head 9, during welding.

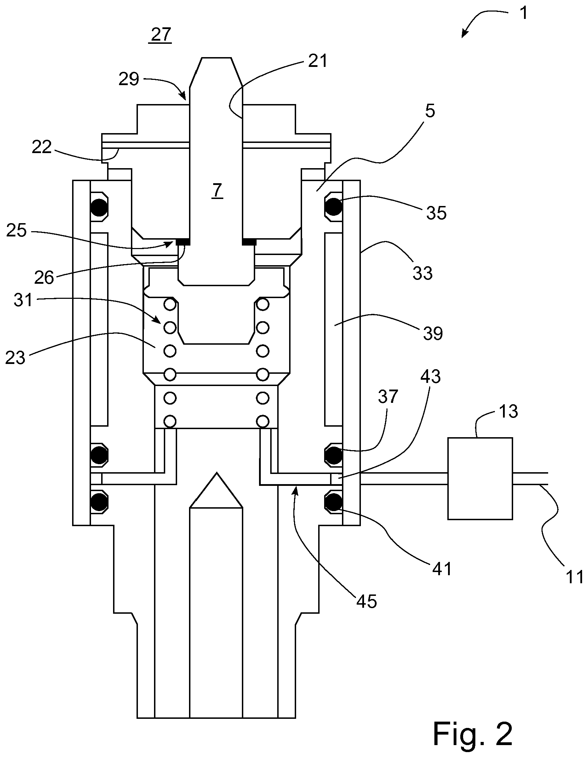

Fig. 2 illustrates a cross section of the electrode arrangement 1 illustrated in Fig. 1. The electrode arrangement 1 comprises an electrode holder 5, a guide pin 7, a first electrode head 9, a purge air supply 11, and a control unit 13. The first electrode head 9 is arranged at a distal end of the guide pin 7. The guide pin 7 is slidably arranged in an aperture 21 of the electrode holder 5, between an upper position and a lower position. In Fig. 2, the guide pin 7 is illustrated in the upper position. The electrode holder 5 comprises an internal space 23, to which the purge air supply 11 is connected. The guide pin 7 is arranged such that a connection 25 between the internal space 23 and the atmosphere 27 is open when the guide pin 7 is in the lower position and closed when the guide pin 7 is in the upper position. The guide pin 7 comprises a sealing member 26 arranged to ensure that the connection 25 between the internal space 23 and the atmosphere 27 is closed when the guide pin 7 is in the upper position. The control unit 13 is arranged to monitor an air pressure of the purge air supply 11 and to estimate a position of the guide pin 7 on the basis of the monitored air pressure. That is, in case the control unit 13 detects a high air pressure of the purge air supply 11, the guide pin 7 is estimated to be in the upper position, as illustrated in Fig. 2. Likewise, in case the control unit 13 detects a low air pressure of the purge air supply 11, the guide pin 7 is estimated to be in the lower position.

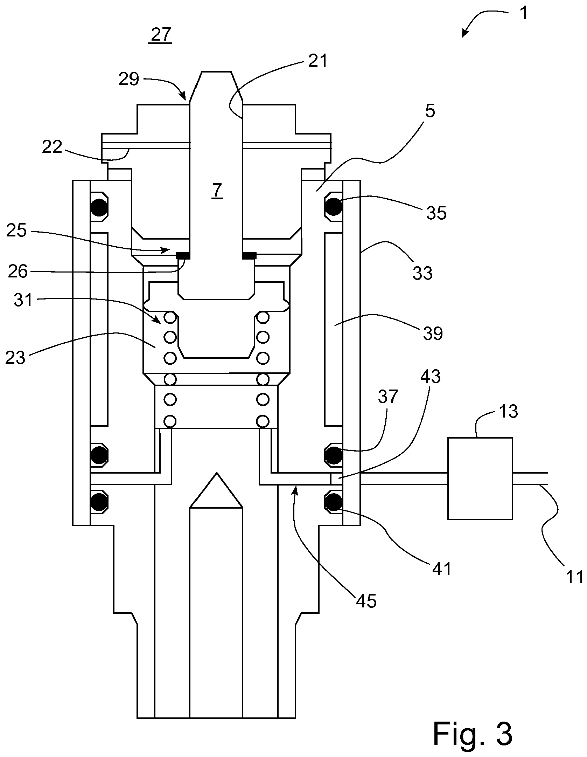

Fig. 3 illustrates the electrode arrangement 1 illustrated in Fig. 2 with the guide pin 7 in the lower position. As can be seen, the connection 25 between the internal space 23 and the atmosphere 27 is open when the guide pin 7 is in the lower position. The connection 25 between the internal space 23 and the atmosphere 27 is via a gap 29 between the guide pin 7 and the aperture 21. In addition, the electrode holder 5 may comprise channels 22 extending from an outer surface of the electrode holder 5 to the gap 29 between the guide pin 7 and the aperture 21. Thereby, when the guide pin 7 is in the lower position, air will flow from the internal space 23 to the atmosphere 27 via the connection 25 and the gap 29 between the guide pin 7 and the aperture 21 and alternatively also via channels 22. Such an air flow through the gap 29 will clean the gap and the first electrode head 9. Further, such air flow will provide some cooling of the guide pin 7 and the first electrode head 9. Due to the channels 22, extending from an outer surface of the electrode holder 5 to the gap 29 between the guide pin 7 and the aperture 21, airflow is ensured between the internal space 23 and the atmosphere 27 even in case parts, such as fasteners and/or work pieces, clog the gap 29 between the guide pin 7 and the aperture 21.

According to some embodiments, the arrangement 1 comprises a spring 31 arranged between the guide pin 7 and the electrode holder 5, to bias the guide pin 7 towards the upper position.

The guide pin 7 may be arranged to be displaced, from the upper position to the lower position, by a relative movement between the first electrode head 9 and the second electrode head 19 from an open position to a closed position. Since the guide pin 7 is arranged to be displaced, from the upper position to the lower position, by a relative movement between the first electrode head 9 and the second electrode head from an open position to a closed position, a reliable estimation of the presence of, and/or orientation of, a fastener can be achieved by the control unit 13 estimating the position of the guide pin 7 on the basis of the monitored air pressure. That is, in case the control unit 13 does not recognize a drop in air pressure of the purge air supply 11 during the relative movement between the first electrode head 9 and the second electrode head 19 from an open position to a closed position, a fastener can be estimated not to be present or not to be properly oriented. Likewise, the case where the first electrode head 9 detaches from the guide pin 7, or breakage of the guide pin 7 or the first electrode 9, will also be detected by the control unit 13, since the guide pin 7 in such cases will not be displaced from the upper position to the lower position.

The control unit 13 comprises a pressure sensor, or the like, arranged to monitor an air pressure of the purge air supply 11. Further, the control unit 13 comprises a processing unit, or the like, arranged to estimate a position of the guide pin 7 on the basis of the monitored air pressure. Further, the control unit 13 may comprise an output unit, such as a display or speaker, arranged to output the estimated position of the guide pin 7 to a user of the welding assembly. Further, such an output unit may be arranged to alert a user in case a fastener is estimated not to be present or properly orientated, during a weld process, or detachment or brakeage of the first electrode head 9 or the guide pin 7.

The electrode arrangement 1 may further comprise a cooling jacket 33, enclosing the electrode holder 5 and an upper sealing 35 and a first lower sealing 37, which together with the cooling jacket 33 and the electrode holder 5 defines a first essentially cylindrical volume 39. The first essentially cylindrical volume 39 is arranged to accommodate cooling liquid. The electrode holder 5 may comprise internal cooling ducts (not shown) arranged to circulate cooling liquid through the first essentially cylindrical volume 39. The arrangement 1 may further comprise a second lower sealing 41, arranged to cooperate with the first lower sealing 37 to define second essentially cylindrical volume 43, being in connection with the internal space 23 of the electrode holder 5. The second essentially cylindrical volume 43 may be in connection with the internal space 23 via drilled ducts 45 in the electrode holder 5. Further, as illustrated in Fig. 3, in these embodiments, the purge air supply 11 is connected to the internal space 23 via said second essentially cylindrical volume 43. Thereby, the cooling jacket 33, with said connection of said purge air supply, will admit a 360 degree rotation of the cooling jacket 33 around the electrode holder 5.

Since a 360 degree rotation of the cooling jacket 33 is admitted around the electrode holder 5, flexibility of positioning of the electrode arrangement 1 is improved and positioning of the electrode arrangement 1 in relation to other objects in a workshop is facilitated. These features are allowed since the need for an additional sensor mounted onto the electrode holder 5 is eliminated due to the control unit 13 being arranged to monitor an air pressure of the purge air supply 11 and to estimate a position of the guide pin 7 on the basis of the monitored air pressure. That is, 360 degree rotation of the cooling jacket 33 is admitted around the electrode holder 5 since the need for an additional sensor, extending through the cooling jacket 33 into the electrode holder 5, is eliminated.

Also, as illustrated in Fig. 3, the connection of the purge air supply 11 is in a lower portion of the electrode arrangement 1. Thereby, the connection is provided in a less vulnerable position with regard to damages, as compared to prior art solutions.

The expression nut welding is intended to encompass stud welding as well.

## Claims

1. An electrode arrangement (1) for a nut welding assembly (3) comprising;
- an electrode holder (5),
- a guide pin (7),
- a first electrode head (9),
- a purge air supply (11), and
- a control unit (13),
where the first electrode head (9) is arranged at a distal end of the guide pin (7) and where the first electrode head (9), during an intended use, is arranged to receive a fastener (15) and to cooperate with a second electrode head (19) such that an electrical current is applied across the first electrode head (9) and the second electrode head (19) via the fastener (15) and a work piece (17) to weld the fastener (15) onto the work piece (17), and where the guide pin (7) is slidably arranged in an aperture (21) of the electrode holder (5) between an upper position and a lower position, where the electrode holder (5) comprises an internal space (23) to which the purge air supply (11) is connected and where the guide pin (7) is arranged such that a connection (25) between the internal space (23) and the atmosphere (27) is open when the guide pin (7) is in the lower position and closed when the guide pin (7) is in the upper position, **characterized in that** the control unit (13) is arranged to monitor an air pressure of the purge air supply (11) and to estimate a position of the guide pin (7) on the basis of the monitored air pressure.

2. The electrode arrangement (1) according to claim 1 where the connection (25) between the internal space (23) and the atmosphere (27) is via a gap (29) between the guide pin (7) and the aperture (21).

3. The electrode arrangement (1) according to claim 1 or 2 where the arrangement (1) comprises a spring (31) arranged between the guide pin (7) and the electrode holder (5) to bias the guide pin (7) towards the upper position.

4. The electrode arrangement (1) according to any one of the preceding claims where the guide pin (7) is arranged to be displaced from the upper position to the lower position by a relative movement between the first electrode head (9) and the second electrode head (19) from an open position to a closed position.

5. The electrode arrangement (1) according to any one of the preceding claims further comprising a cooling jacket (33) enclosing the electrode holder (5) and an upper sealing (35) and a first lower sealing (37) which together with the cooling jacket (33) and the electrode holder (5) defines a first essentially cylindrical volume (39) arranged to accommodate cooling liquid where the arrangement (1) further comprises a second lower sealing (41) arranged to cooperate with the first lower sealing (37) to define second essentially cylindrical volume (43) being in connection with the internal space (23) of the electrode holder (5) where the purge air supply (11) is connected to the internal space (23) via said second essentially cylindrical volume (43).

6. A nut welding assembly (3) comprising an electrode arrangement (1) according to any one of the preceding claims.

7. The nut welding assembly (3) according to claim 6 further comprising the second electrode head (19) where the first electrode head (9) and the second electrode head (19) are movable relative to one another between an open position and a closed position, the open position constituting a position where a work piece (17) and a fastener (15) is intended to be positioned onto the first electrode head (9) and the closed position constituting a position in which the first electrode head (9) and the second electrode head (19) are arranged to press together the fastener (15) and the work piece (17) and apply an electrical current through the fastener (15) and the work piece (17) to weld them together.

## Patentansprüche

1. Elektrodenanordnung (1) für eine Anordnung (3) zum Schweißen von Muttern, die Folgendes umfasst:
- einen Elektrodenhalter (5),
- einen Führungsstift (7),
- einen ersten Elektrodenkopf (9),
- eine Spülluftzufuhr (11) und
- eine Steuereinheit (13),
wobei der erste Elektrodenkopf (9) an einem distalen Ende des Führungsstifts (7) angeordnet ist und wobei der erste Elektrodenkopf (9) während einer vorgesehenen Verwendung dazu ausgelegt ist, ein Befestigungselement (15) zu empfangen und mit einem zweiten Elektrodenkopf (19) so zusammenzuarbeiten, dass ein elektrischer Strom über das Befestigungselement (15) und ein Werkstück (17) durch den ersten Elektrodenkopf (9) und den zweiten Elektrodenkopf (19) eingegeben wird, um das Befestigungselement (15) auf das Werkstück (17) zu schweißen, und wobei der Führungsstift (7) in einer Öffnung (21) des Elektrodenhalters (5) zwischen einer oberen Position und einer unteren Position verschiebbar angeordnet ist, wobei der Elektrodenhalter (5) einen Innenraum (23), mit dem die Spülluftzufuhr (11) verbunden ist, umfasst und wobei der Führungsstift (7) so angeordnet ist, dass eine Verbindung (25) zwischen dem Innenraum (23) und der Umgebung (27) offen ist, wenn sich der Führungsstift (7) in der unteren Position befindet, und geschlossen ist, wenn sich der Führungsstift (7) in der oberen Position befindet, **dadurch gekennzeichnet, dass** die Steuereinheit (13) dazu ausgelegt ist, einen Luftdruck der Spülluftzufuhr (11) zu überwachen und anhand des überwachten Luftdrucks eine Position des Führungsstifts (7) zu schätzen.

2. Elektrodenanordnung (1) nach Anspruch 1, wobei die Verbindung (25) zwischen dem Innenraum (23) und der Umgebung (27) über eine Lücke (29) zwischen dem Führungsstift (7) und der Öffnung (21) besteht.

3. Elektrodenanordnung (1) nach Anspruch 1 oder 2, wobei die Anordnung (1) eine Feder (31) umfasst, die zwischen dem Führungsstift (7) und dem Elektrodenhalter (5) angeordnet ist, um den Führungsstift (7) in Richtung zu der oberen Position vorzubelasten.

4. Elektrodenanordnung (1) nach einem der vorhergehenden Ansprüche, wobei der Führungsstift (7) dazu ausgelegt ist, durch eine relative Bewegung zwischen dem ersten Elektrodenkopf (9) und dem zweiten Elektrodenkopf (19) von einer offenen Position in eine geschlossene Position von der oberen Position in die untere Position verlagert zu werden.

5. Elektrodenanordnung (1) nach einem der vorhergehenden Ansprüche, die ferner einen Kühlmantel (33), der den Elektrodenhalter (5) und eine obere Abdichtung (35) umgibt, und eine erste untere Abdichtung (37), die zusammen mit dem Kühlmantel (33) und dem Elektrodenhalter (5) ein erstes im Wesentlichen zylindrisches Volumen (39), das dazu ausgelegt ist, Kühlflüssigkeit aufzunehmen, definiert, umfasst, wobei die Anordnung (1) ferner eine zweite untere Abdichtung (41) umfasst, die dazu ausgelegt ist, mit der ersten unteren Abdichtung (37) zusammenzuarbeiten, um ein zweites im Wesentlichen zylindrisches Volumen (43) zu definieren, das sich in einer Verbindung mit dem Innenraum (23) des Elektrodenhalters (5) befindet, wobei die Spülluftzufuhr (11) über das zweite im Wesentlichen zylindrische Volumen (43) mit dem Innenraum (23) verbunden ist.

6. Anordnung (3) zum Schweißen von Muttern, die eine Elektrodenanordnung (1) nach einem der vorhergehenden Ansprüche umfasst.

7. Anordnung (3) zum Schweißen von Muttern nach Anspruch 6, die ferner den zweiten Elektrodenkopf (19) umfasst, wobei der erste Elektrodenkopf (9) und der zweite Elektrodenkopf (19) relativ zueinander zwischen einer offenen Position und einer geschlossenen Position bewegt werden können, wobei die offene Position eine Position darstellt, in der ein Werkstück (17) und ein Befestigungselement (15) dazu bestimmt sind, auf dem ersten Elektrodenkopf (9) positioniert zu werden, und die geschlossene Position eine Position darstellt, in der der erste Elektrodenkopf (9) und der zweite Elektrodenkopf (19) dazu ausgelegt sind, das Befestigungselement (15) und das Werkstück (17) zusammenzudrücken und einen elektrischen Strom durch das Befestigungselement (15) und das Werkstück (17) einzugeben, um sie zusammenzuschweißen.

## Revendications

1. Agencement d'électrodes (1) pour un ensemble de soudage d'écrous (3) comprenant :
- un support d'électrodes (5),
- une broche de guidage (7),
- une première tête d'électrode (9),
- une alimentation en air de purge (11), et
- une unité de commande (13),
la première tête d'électrode (9) étant disposée à une extrémité distale de la broche de guidage (7) et la première tête d'électrode (9), lors d'un usage prévu, étant agencée pour recevoir une fixation (15) et pour coopérer avec une deuxième tête d'électrode (19) de telle sorte qu'un courant électrique est appliqué à travers la première tête d'électrode (9) et la deuxième tête d'électrode (19) par l'intermédiaire de la fixation (15) et d'une pièce de fabrication (17) pour souder la fixation (15) sur la pièce de fabrication (17), et la broche de guidage (7) étant disposée avec faculté de glissement dans une ouverture (21) du support d'électrodes (5) entre une position supérieure et une position inférieure, le support d'électrodes (5) comprenant un espace interne (23) auquel est reliée l'alimentation en air de purge (11) et la broche de guidage (7) étant agencée de telle sorte qu'une connexion (25) entre l'espace interne (23) et l'atmosphère (27) est ouverte quand la broche de guidage (7) est dans la position inférieure et fermée quand la broche de guidage (7) est dans la position supérieure, **caractérisé en ce que** l'unité de commande (13) est configurée pour surveiller une pression d'air de l'alimentation en air de purge (11) et pour estimer une position de la broche de guidage (7) sur la base de la pression d'air surveillée.

2. Agencement d'électrodes (1) selon la revendication 1 dans lequel la connexion (25) entre l'espace interne (23) et l'atmosphère (27) se fait par l'intermédiaire d'un interstice (29) entre la broche de guidage (7) et l'ouverture (21).

3. Agencement d'électrodes (1) selon la revendication 1 ou 2, l'agencement (1) comprenant un ressort (31) disposé entre la broche de guidage (7) et le support d'électrodes (5) pour rappeler la broche de guidage (7) vers la position supérieure.

4. Agencement d'électrodes (1) selon l'une quelconque des revendications précédentes dans lequel la broche de guidage (7) est agencée pour être déplacée de la position supérieure à la position inférieure par un mouvement relatif entre la première tête d'électrode (9) et la deuxième tête d'électrode (19) d'une position ouverte à une position fermée.

5. Agencement d'électrodes (1) selon l'une quelconque des revendications précédentes comprenant en outre une chemise de refroidissement (33) entourant le support d'électrodes (5) et un joint d'étanchéité supérieur (35) et un premier joint d'étanchéité inférieur (37) qui, conjointement avec la chemise de refroidissement (33) et le support d'électrodes (5), définissent un premier volume essentiellement cylindrique (39) agencé pour accueillir un liquide de refroidissement, l'agencement (1) comprenant en outre un deuxième joint d'étanchéité inférieur (41) agencé pour coopérer avec le premier joint d'étanchéité inférieur (37) pour définir un deuxième volume essentiellement cylindrique (43) qui est relié à l'espace interne (23) du support d'électrodes (5), l'alimentation en air de purge (11) étant reliée à l'espace interne (23) par l'intermédiaire dudit deuxième volume essentiellement cylindrique (43).

6. Ensemble de soudage d'écrous (3) comprenant un agencement d'électrodes (1) selon l'une quelconque des revendications précédentes.

7. Ensemble de soudage d'écrous (3) selon la revendication 6 comprenant en outre la deuxième tête d'électrode (19), la première tête d'électrode (9) et la deuxième tête d'électrode (19) étant mobiles l'une par rapport à l'autre entre une position ouverte et une position fermée, la position ouverte constituant une position où une pièce de fabrication (17) et une fixation (15) sont destinées à être positionnées sur la première tête d'électrode (9) et la position fermée constituant une position dans laquelle la première tête d'électrode (9) et la deuxième tête d'électrode (19) sont disposées pour comprimer conjointement la fixation (15) et la pièce de fabrication (17) et appliquer un courant électrique à travers la fixation (15) et la pièce de fabrication (17) pour les souder ensemble.
